(19) Europäisches Patentamt
European Patent Office
Office européen des brevets

(11) EP 0 650 587 B1

(12) **EUROPÄISCHE PATENTSCHRIFT**

(45) Veröffentlichungstag und Bekanntmachung des Hinweises auf die Patenterteilung:
**05.11.1997 Patentblatt 1997/45**

(51) Int Cl.⁶: **G01M 15/00**

(86) Internationale Anmeldenummer:
**PCT/DE94/00470**

(21) Anmeldenummer: **94913022.3**

(22) Anmeldetag: **28.04.1994**

(87) Internationale Veröffentlichungsnummer:
**WO 94/27132 (24.11.1994 Gazette 1994/26)**

(54) **VERFAHREN UND VORRICHTUNG ZUM ERKENNEN VON VERBRENNUNGSAUSSETZERN**

PROCESS AND DEVICE FOR DETECTING MISFIRING

PROCEDE ET DISPOSITIF PERMETTANT DES RATES DE COMBUSTION

(84) Benannte Vertragsstaaten:
**DE FR GB IT**

(30) Priorität: **17.05.1993 DE 4316409**

(43) Veröffentlichungstag der Anmeldung:
**03.05.1995 Patentblatt 1995/18**

(73) Patentinhaber:
• **ROBERT BOSCH GMBH**
  **70442 Stuttgart (DE)**
• **AUDI AG**
  **85045 Ingolstadt (DE)**

(72) Erfinder:
• **KLENK, Martin**
  **D-71522 Backnang (DE)**
• **WIMMER, Wolfgang**
  **D-74235 Erlenbach (DE)**

(56) Entgegenhaltungen:
**WO-A-90/15235        DE-A- 4 009 285**
**DE-A- 4 138 765**

## Beschreibung

Die Erfindung betrifft ein Verfahren und eine Vorrichtung zum Erkennen von Verbrennungsaussetzern in einem Verbrennungsmotor, die auf einer Auswertung von Kurbelwellen-Drehzahlschwankungen beruhen. Eine Störung der Kurbelwellendrehzahl kann durch Rückwirkungen des Fahrzeug-Antriebsstrangs zum Beispiel bei extremen Fahrbahnunebenheiten, bei ruckelndem Fahrbetrieb oder bei Wechsel von Reifenschlupf und Reifenhaftung auf der Fahrbahn erfolgen. Derartige Störungen werden von den Kurbelwellen-Drehzahlschwankungen bei Verbrennungsaussetzern, insbesondere auch von Mehrfachaussetzern, unterschieden. Dabei wird unter Mehrfachaussetzern das gleichzeitige Aussetzen der Verbrennung in mehreren Zylindern verstanden.

## Stand der Technik

Zum Erkennen von Verbrennungsaussetzern sind zahlreiche Verfahren bekannt geworden. Von diesen interessieren im folgenden nur diejenigen, die mit sogenannten Laufunruhewerten arbeiten. Derartige Werte sind im wesentlichen ein Maß für schnelle Änderungen der Kurbelwellendrehzahl des Motors. In der Regel werden Laufunruhewerte vorzeichenmäßig so bestimmt, daß ein schnelles Absinken der Drehzahl, wie es durch einen Verbrennungsaussetzer hervorgerufen wird, zu einem großen positiven Laufunruhewert für den betroffenen Zylinder führt, während die Laufunruhewerte normaler Verbrennungen deutlich kleiner und ggf. negativ sind. Überschreitet der aktuelle Laufunruhewert für einen Zylinder einen Schwellenwert, der typischerweise aus einem Kennfeld abhängig von aktuellen Werten von Betriebsgrößen ausgelesen wird, so ist dies ein Zeichen für einen Aussetzer in dem betreffenden Zylinder. Bei der Bildung von Laufunruhewerten kann in äquivalenter Weise auch eine umgekehrte Vorzeichengebung verwendet werden in dem Sinne, daß einem schnellen Absinken der Drehzahl ein negativer Laufunruhewert entspricht. In diesem Fall ist ein Aussetzer dadurch zu erkennen, daß der zugehörige Laufunruhewert einen negativen Schwellenwert unterschreitet.

Eine Übersicht über verschiedene Verfahren und Vorrichtungen zum Erkennen von Verbrennungsaussetzern ist in DE-A-40 09 285 und in DE-A-41 38 765 gegeben. Auf diese Übersicht wird der Kürze halber verwiesen. Bei der vorliegenden Erfindung kommt es nicht darauf an, wie Laufunruhewerte gebildet werden, sondern es geht darum, wie mit Hilfe beliebig ermittelter Laufunruhewerte zuverlässig entschieden werden kann, ob Aussetzer vorliegen oder nicht.

In WO-A-90/15235 werden veschiedene Gruppen von Laufunruhewerten gebildet. In jeder Gruppe werden die Laufunruhewerte gemittelt und wird die Differenz zwischen dem Minimal- und dem Maximalwert der gemittelten Werte gebildet. Die differenz wird als Größe für das Ausmaß der Laufunruhe gewertet um Aussetzer zu erkennen.

Problematisch bei der Aussetzererkennung ist es, daß nicht nur Aussetzer zu Drehzahlschwankungen führen, sondern daß solche auch durch Schwingungen des Fahrzeug-Triebstrangs auf den Motor übertragen werden. Solche Schwingungen werden insbesondere durch Fahrbahnunebenheiten hervorgerufen.

Fahrbahnunebenheiten können mit Hilfe der Signale eines Beschleunigungssensors am betroffenen Fahrzeug oder mit Hilfe eines Signals festgestellt werden, das Schwankungen der Drehzahl eines Rades überwacht. Überschreiten die ermittelten Werte einen vorgegebenen Schwellenwert, ist zu befürchten, daß die Aussetzererkennung nachteilig beeinflußt wird, weswegen dieselbe, zweckmäßigerweise bereits die Berechung von Laufunruhewerten, unterbrochen wird, bis die genannten Signale wieder unter den jeweiligen Schwellenwert fallen. Entsprechende Verfahren und Vorrichtungen sind jedoch mit erhöhtem Aufwand und erhöhten Kosten verbunden.

## Darstellung der Erfindung

Der Erfindung liegt die Aufgabe zugrunde, ein Verfahren und eine Vorrichtung zum Erkennen von Verbrennungsaussetzern in einem Verbrennungsmotor anzugeben, das dazu in der Lage ist, alleine mit Hilfe von Laufunruhewerten festzustellen, ob die Aussetzererkennung durch Drehzahlschwankungen gestört ist, die vom Triebstrang auf den Motor übertragen werden.

Die Erfindung ist für das Verfahren durch die Merkmale von Anspruch 1 und für die Vorrichtung durch die Merkmale von Anspruch 5 gegeben.

Die nachfolgenden Ausführungen beziehen sich auf den eingangs genannten Regelfall, wonach die Laufunruhewerte im Aussetzerfall erhöhte positive Werte annehmen. Für Laufunruhewerte, die mit umgekehrter Vorzeichengebung gebildet werden, sind in den nachfolgenden Ausführungen gegebenenfalls die Vorzeichengebung und die Größer/Kleiner-Relationen sinngemäß umzukehren.

Der Erfindung liegt die Erkenntnis zugrunde, daß sich der Wertebereich von Laufunruhewerten im Fall von Aussetzern in mindestens zwei Bänder aufspaltet. Im Fall von über den Triebstrang angeregten Drehzahlschwankungen kommt es dagegen nur zu einer Aufweitung des Wertebereichs ohne Aufspaltung in solche Bänder. Erfindungsgemäß wird das Ausmaß einer eventuellen Bandaufspaltung untersucht. Wird eine Aufspaltung festgestellt und ist diese größer als ein vorgegebener Schwellenabstand zwischen den Bändern von Laufunruhewerten, wird diese Information als Hinweis darauf gewertet, daß Aussetzer vorliegen.

Wird keine zu beachtende Bandaufspaltung festgestellt, stellt sich die Frage, ob eventuell Drehzahlschwankungen vorliegen, die es geraten erscheinen lassen, die Aussetzererkennung zu unterbrechen. Gemäß einer vorteilhaften Weiterbildung der Erfindung wird dann, wenn keine beachtliche Bandaufspaltung festgestellt wird, untersucht, ob eine Aufweitung des Laufunruhe-Wertebereichs vorliegt, indem überprüft wird, ob Laufunruhewerte einen vorgegebenen negativen Laufunruhe-Schwellenwert unterschreiten. Ist dies der Fall, wird auf durch den Triebstrang verursachte Drehzahlschwankungen geschlossen, und die Aussetzererkennung wird unterbrochen.

Wenn im folgenden von Triebstrangschwingungen die Rede ist, sind damit nur solche Schwingungen gemeint, die nicht durch die Funktion des Motors bedingt sind, sondern solche, die sich, umgekehrt, auf die Momentandrehzahl des Motors auswirken.

## Zeichnung

Fig. 1a bis 1d: Diagramme betreffend die zeitliche Verteilung von Laufunruhewerten für folgende Fälle: a) aussetzerfreier Motorbetrieb ohne Störungen durch Triebstrangschwingungen; b) Aussetzer in einem Zylinder; c) Mehrfachaussetzer, wobei jede zweite Verbrennung des Motors aussetzt; d) aussetzerfreier Motorbetrieb mit Störung durch Triebstrangschwingungen;
Fig. 2: Flußdiagramm zur Übersicht über ein Ausführungsbeispiel des erfindungsgemäßen Verfahrens;
Fig. 3: Flußdiagramm betreffend ein konkretes Beispiel zum Feststellen, ob Laufunruhewerte in Bänder aufgespalten sind;
Fig. 4: Flußdiagramm zum Erläutern einer Weiterbildung des erfindungsgemäßen Verfahrens, gemäß der es möglich ist, die Aussetzererkennung zuverlässig zu unterbrechen; und
Fig. 5: Blockdiagramm zum Erläutern eines Ausführungsbeispiels einer erfindungsgemäßen Vorrichtung.

## Beschreibung von Ausführungsbeispielen

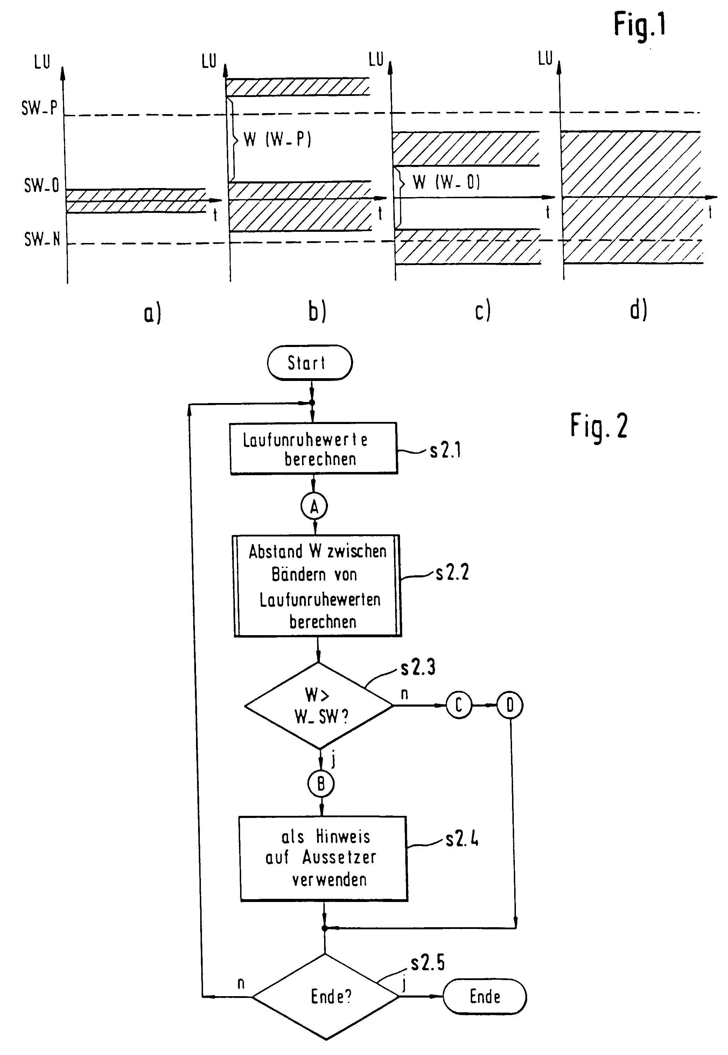

Fig. 1 zeigt für vier verschiedene Fälle den Wertebereich von Laufunruhewerten aufgetragen über der Zeit. Zu Beispielen für die Berechnung von Laufunruhewerten sei auf DE-A-40 09 285 und DE-A-41 38 765 verwiesen. Wenn alle Zylinder eines Verbrennungsmotors ordnungsgemäß arbeiten, schwanken die Laufunruhewerte für die einzelnen Zylinder geringfügig um den Wert Null. Sie sind nicht genau gleich Null, da die Verbrennung nicht in allen Zylindern genau gleich abläuft. Es ergibt sich daher ein gewisser, jedoch relativ schmaler Wertebereich der Laufunruhewerte mit dem Mittelwert Null, wie dies in Fig. 1a dargestellt ist.

Wenn ein einziger Zylinder in einem Mehrzylinder-Verbrennungsmotor Aussetzer aufweist, ergeben sich für diesen Zylinder relativ hohe Laufunruhewerte, die wiederum in einem relativ schmalen Band schwanken. Gleichzeitig verlagert sich das um den Laufunruhewert Null liegende Band im Mittel leicht zu negativen Werten hin, und zwar gerade soweit, daß der Mittelwert aus allen Laufunruhewerten im wesentlichen Null ist, da die anderen Zylinder verstärkt negative Laufunruhewerte aufweisen, um die durch die Aussetzer verursachte Verlangsamung der Kurbelwellenumdrehung zum Beibehalten einer konstanten mittleren Drehzahl zu kompensieren. Dieser Fall ist in Fig. 1b dargestellt.

Fig. 1c zeigt demgegenüber den Fall von Mehrfachaussetzern. In diesem Beispiel setzt jede zweite Verbrennung des Motors aus. Die aussetzenden Zylinder weisen positive Laufunruhewerte auf, während die nichtaussetzenden Zylinder negative Laufunruhewerte zeigen. Die beiden Wertebänder liegen symmetrisch zum Laufunruhewert Null.

Fig. 1d schließlich zeigt den Fall einer starken Verbreiterung des Bandes von Laufunruhewerten gemäß Fig. 1a. Diese zum Laufunruhewert Null symmetrisch liegende Verbreiterung wird durch Triebstrangschwingungen verursacht, wie sie insbesondere verursacht durch Unebenheiten der Fahrbahn durch die Räder und den Triebstrang auf den Motor übertragen werden.

In Fig. 1 sind weiterhin drei Laufunruhe-Schwellenwerte SW_P, SW_O und SW_N eingetragen. Die Schwellenwerte SW_P und SW_N sind im allgemeinen abhängig vom momentanen Betriebszustand des Motors. Der Schwellenwert SW_P ist dabei ein positiver Schwellenwert, wie er bei bisherigen Verfahren verwendet wurde, um zu erkennen, ob ein Zylinder Aussetzer aufweist. Wie aus den Fig. 1b und 1c erkennbar, wird dieser Schwellenwert im Fall von Aussetzern in einem einzigen Zylinder überschritten, jedoch nicht im Fall von Mehrfachaussetzern. Angesichts dieser Problematik offenbart DE-A-41 18 580 ein Verfahren, bei dem die Erkennungsschwelle für Aussetzer abgesenkt wird, wenn Mehrfachaussetzer vermutet werden.

Der positive Schwellenwert SW_P kann nicht nur im Fall von Aussetzern überschritten werden, sondern auch dann, wenn sehr starke Störungen durch Triebstrangschwingungen vorliegen. In dem in Fig. 1d dargestellten Fall sind diese Störungen allerdings noch nicht so stark, daß der positive Schwellenwert SW_P überschritten wäre. Dagegen ist der im Absolutbetrag kleiner gewählte negative Schwellenwert SW_N bereits unterschritten. Mit Hilfe dieses Schwellenwertes können bereits relativ kleine Triebstrangschwingungen detektiert werden, die jedoch schon so groß sind, daß sie die Aussetzererkennung unzuverlässig machen. Jedoch wird die Aussetzererkennung nur dann unterbrochen, wenn außer dem Unterschreiten des negativen Schwellenwertes SW_N noch eine andere Bedingung erfüllt ist.

Diese andere Bedingung hängt mit dem Abstand W der beiden Bänder von Laufunruhewerten in den Fällen der Fig. 1b und 1c zusammen. Ist der Abstand W größer als ein vorgegebener, im allgemeinen vom Betriebszustand des Motors abhängiger Schwellenabstand, wird auf das Vorliegen von Aussetzern erkannt, unabhängig davon, ob der negative Schwellenwert SW_N unterschritten ist (wie im Fall von Fig. 1c) oder nicht (wie im Fall von Fig. 1b). Ist der Abstand W dagegen kleiner als der Schwellenabstand oder kann insbesondere keinerlei Abstand festgestellt werden (wie im Fall von Fig. 1d) und ist zusätzlich der negative Schwellenwert SW_N unterschritten, wird die Aussetzererkennung unterbrochen, d.h. es wird keine Aussage hinsichtlich Aussetzern getroffen.

Der Abstand zwischen einem oberen und einem unteren Band von Laufunruhewerten kann im Fall von Aussetzern in einem einzelnen Zylinder leicht dadurch festgestellt werden, daß die Differenz zwischen dem kleinsten Wert über der positiven Schwelle SW_P und dem größten Wert unter der positiven Schwelle SW_P festgestellt wird. Überlappt jedoch das obere Band die positive Schwelle SW_P oder liegt ganz unter dieser (wie im Fall von Fig. 1c), versagt diese Art der Bandfeststellung. Es kann dann die Differenz zwischen dem kleinsten positiven Wert im oberen Band und dem größten negativen Wert im unteren Band gebildet werden. D.h., daß hier der Laufunruhewert Null, also die in Fig. 1 eingezeichnete Schwelle SW_O, auf ähnliche Weise verwendet wird wie die Schwelle SW_P im gerade zuvor genannten Fall.

Eine weitere Möglichkeit zur Feststellung, ob eine Bandlücke vorliegt, besteht darin, eine Bandbreite vorzugeben, die dem vorstehend genannten Schwellenabstand entspricht. Dieses Band wird dann schrittweise über alle Laufunruhewerte verschoben, und es wird jeweils gezählt, wieviele Laufunruhewerte innerhalb der vorgegebenen Bandbreite liegen. Wenn ein Bereich gefunden wird, für den z.B. gilt, daß von 100 über die betrachtete Zeitspanne erfaßten Laufunruhewerten weniger als zwei innerhalb der vorgegebenen Bandbreite liegen, wird davon ausgegangen, daß eine Bandlücke mindestens mit der Breite des Schwellenabstandes vorliegt.

In ähnlicher Weise kann zur Feststellung, ob die in einer betrachteten Zeitspanne erfaßten Laufunruhewerte eine Bandlücke aufweisen, schrittweise die Lage der Schwelle ausgehend von dem positiven Wert SW_P zu kleineren Werten hin verschoben und jeweils die Differenz zwischen dem kleinsten Laufunruhewert oberhalb der Schwelle und dem größten Laufunruhewert unterhalb der Schwelle gebildet werden. Findet sich eine Lage der Schwelle, für die diese Differenz den vorgegebenen Schwellenabstand überschreitet, so liegt innerhalb der Laufunruhewerte eine Bandlücke mit mindestens der Breite des Schwellenabstandes vor.

Um zuverlässige Werte für den genannten Bandabstand W zu finden, seien nun zwei Beispiele konkreter erläutert.

Gemäß dem ersten Beispiel wird der minimale Laufunruhewert $MINLU_1$ über einem Schwellenwert S (Schwellenwert SW_P oder Schwellenwert SW_O), wie er für eine Verbrennung mit der fortlaufenden Nummer i gilt, wie folgt bestimmt:

$$\text{falls } LU[i] \geq S \text{ und } LU[i] > MINLU[i-1], \text{ dann}$$

$$MINLU[i] = c1 \cdot LU[i] + (1-c1)\, MINLU[i-1];$$

$$\text{falls } LU[i] \geq S \text{ und } LU[i] \leq MINLU[i-1], \text{ dann}$$

$$MINLU[i] = c2 \cdot LU[i] + (1-c2) \cdot MINLU[i-1];$$

$$\text{falls } LU[i] < S, \text{ dann}$$

$$MINLU[i] = MINLU[i-1].$$

Hierbei ist LU[i] der Laufunruhewert für die Verbrennung mit der Nummer i. Für die Filterkonstanten c1 und c2, deren Werte zwischen Null und 1 liegen, gilt vorzugsweise c2 > c1. Dies hat zur Folge, daß sich der Wert MINLU[i] nur bei einer deutlich ausgeprägten Bandlücke von der Schwelle S wegbewegen kann, während er sich relativ schnell an die Schwelle annähert, wenn bei Störungen durch Triebstrangschwingungen ein Laufunruhewert dicht bei der Schwelle S erzeugt wird.

Auf völlig entsprechende Weise wird ein Wert MAXLU[i] gebildet, d.h. ein Maß für den höchsten zuverlässig erscheinenden Laufunruhewert unter der Schwelle S.

Aus den Werten MINLU[i] und MAXLU[i] für eine jeweilige Verbrennung i wird der zugehörige Bandabstand W[i] wie folgt berechnet:

$$W[i] = const \cdot (MINLU[i] - MAXLU[i])$$

Wird für die Konstante const der Wert 1 gesetzt und verwendet man als Startwerte für MINLU[i] und MAXLU[i] jeweils den Wert Null, so ist bei Auftreten einer Bandaufspaltung gemäß Fig. 1b und 1c der Bandabstand W[i] zunächst Null, wächst dann aber bald auf den in Fig. 1 eingezeichneten Wert W an. Andere Werte für die Konstante const ermöglichen eine leichte Anpassung an unterschiedliche Anwendungsfälle bei jeweils gleichem Berechnungsverfahren.

Gemäß einem zweiten Beispiel wird eine bestimmte Anzahl von Laufunruhewerten gesammelt, z.B. für 100 Verbrennungen (dies kann fortlaufend geschehen oder, einfacher, nach jeweils der vorgegebenen Anzahl von Verbrennungen). Von allen erfaßten Werten wird der minimale Wert über der Schwelle S als Maß MINLU erfaßt, während der maximale Wert unter der Schwelle S als MAXLU erfaßt wird. Aus den Werten MINLU und MAXLU wird der Bandabstand W auf dieselbe Weise bestimmt wie beim ersten Beispiel. Bei der jeweiligen Neuberechnung von Abständen W[i] kann noch eine Filterung gemäß

$$W[i] = c \cdot W[i-1] + (1-c) \cdot const \cdot (MINLU[i] - MAXLU[i])$$

mit einer Filterkonstanten $0 < c < 1$ erfolgen. Hier numeriert der Index i die aufeinanderfolgenden Neuberechnungs-Schritte. Liegen alle Laufunruhewerte auf einer Seite der Schwelle S, so wird der Wert für den Bandabstand zu Null gesetzt.

Die zuvor anhand der Fig. 1a bis 1d anschaulich erläuterten Vorgehensweisen seien nun anhand der Flußdiagramme der Fig. 2 bis 4 genauer dargestellt.

Gemäß Fig. 2 werden in einem Schritt S2.1 Laufunruhewerte berechnet. Nach dem Durchlaufen der Marke A wird in einem Unterprogramm in Schritt S2.2 der Bandabstand zwischen den Laufunruhewerten berechnet. In einem Schritt S2.3 wird untersucht, ob der berechnete Abstand W über einer Schwelle W_SW liegt. Ist dies nicht der Fall, wird über zwei Marken C und D ein Endeschritt S2.5 erreicht. Andernfalls folgt über eine Marke B ein Schritt S2.4, der die Tatsache, daß der Bandabstand größer ist als der Schwellenabstand W_SW, als Information verwendet, die ein Hinweis darauf ist, daß Aussetzer vorliegen. Diese Information kann dann mit weiteren Informationen zur endgültigen Aussetzererkennung verknüpft werden. Auf den Schritt S2.4 folgt der bereits genannte Endeschritt S2.5, in dem untersucht wird, ob die Aussetzererkennung beendet werden soll, z.B. bei Stillstand des Motors. Ist dies nicht der Fall, folgt erneut der Schritt S2.1, während andernfalls das Verfahren beendet wird.

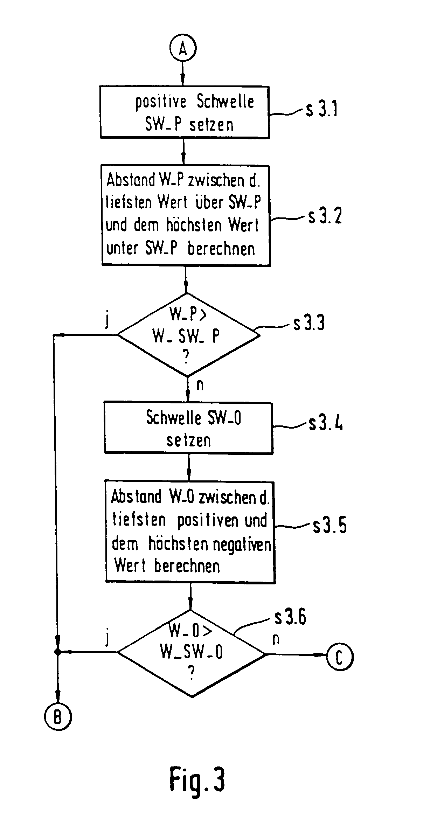

Fig. 3 veranschaulicht ein konkreteres Beispiel für den Ablauf des Verfahrens zwischen den Marken A, B und C. In einem Schritt S3.1 nach der Marke A wird die positive Schwelle SW_P gesetzt. In einem folgenden Schritt S3.2 wird der Abstand W_P zwischen dem tiefsten Laufunruhewert über SW_P und dem höchsten Wert unter SW_P berechnet. In einem Schritt 53.3 wird untersucht, ob der berechnete Abstand W_P über einem Schwellenabstand W_SW_P liegt. Ist dies der Fall, wird sofort die Marke B erreicht. Andernfalls wird in einem Schritt S3.4 die Schwelle SW_O gesetzt. In einem Schritt S3.5 wird der Abstand W_O zwischen dem kleinsten positiven und dem betragsmäßig kleinsten, also höchsten, negativen Laufunruhewert berechnet. In einem Schritt S3.6 wird abgefragt, ob der berechnete Abstand W_O über einem vorgegebenen Schwellenabstand W_SW_O liegt. Ist dies der Fall, wird die Marke B erreicht, andernfalls die Marke C.

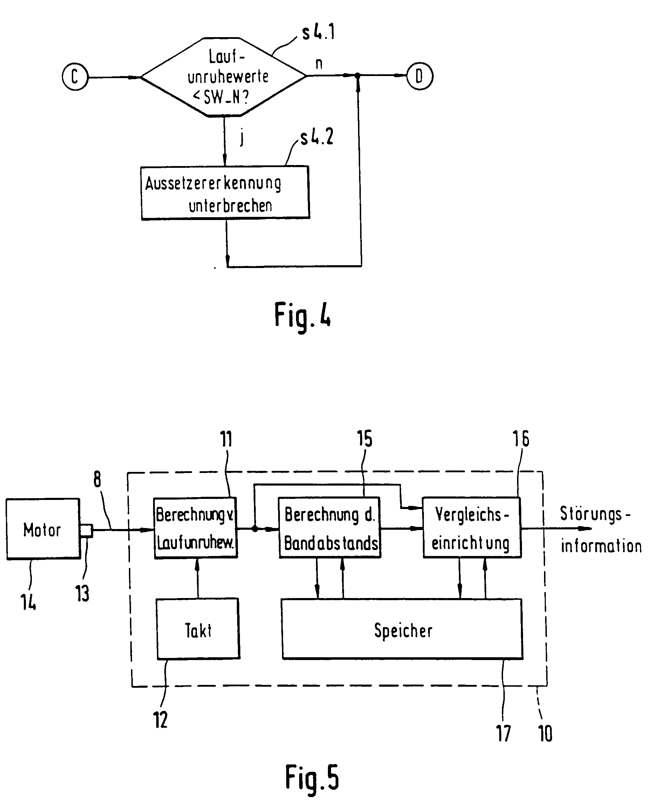

Fig. 4 betrifft den Detailablauf, wie er sich an die Marke C anschließt, d.h., wie er dann folgt, wenn zwischen den Laufunruhewerten kein Bandabstand größer als ein Schwellenabstand festgestellt wird. Der Ablauf dient dazu, zu entscheiden, ob die Aussetzererkennung wegen störender Triebstrangschwingungen unterbrochen werden soll. In einem Schritt S4.1 wird untersucht, ob Laufunruhewerte unter dem negativen Laufunruhe-Schwellenwert SW_N liegen. Ist dies nicht der Fall, wird sofort die Marke D in Fig. 2 erreicht. Andernfalls wird in einem Schritt S4.2 die Aussetzererkennung unterbrochen. Sie wird bei Eintritt einer vorgegebenen Bedingung wieder aufgenommen, z.B. dann, wenn kein Laufunruhewert mehr unter dem negativen Schwellenwert SW_N liegt oder wenn eine vorgegebene Zeitspanne abgelaufen oder eine vorgebene Anzahl von Kurbelwellenumdrehungen erreicht ist.

Fig. 5 veranschaulicht ein Ausführungsbeispiel für eine erfindungsgemäße Aussetzererkennungsvorrichtung 10. Sie verfügt über eine Berechnungseinrichtung 11 für Laufunruhewerte, die von einem Taktgeber 12 ein festes Taktsignal sowie von einem Winkelgeber 13 an einem Verbrennungsmotor 14 ein Kurbelwinkelsignal e erhält. Sie gibt die berechneten Laufunruhewerte an eine Einrichtung 15 zum Berechnen des Abstandes W zwischen Bändern von Laufunruhewerten aus. Diese erhält von einem Speicher 17 einen Laufunruhe-Schwellenwert und führt ihr Ausgangssignal einer Vergleichseinrichtung 16 zu, die einen von dem Speicher 17 vorgegebenen Schwellenabstand zugeführt bekommt, mit dem sie den von der Abstandsberechnungseinheit 15 erhaltenen Wert vergleicht. Ergibt sich, daß zwischen den Laufunruhewerten keine signifikante Bandlücke vorliegt, so überprüft die Vergleichseinrichtung 16, ob die von der Einrichtung 11 berechneten Laufunruhewerte einen von dem Speicher 17 vorgegebenen negativen Schwellenwert unterschreiten. Treten negative Laufunruhewerte unterhalb dieser Schwelle auf, ohne daß eine Bandaufspaltung innerhalb der Laufunruhewerte festgestellt wird, gibt die Vergleichseinrichtung 16 eine Information über das Vorliegen von Störungen durch Triebstrangschwingungen aus, mit der die Aussetzererkennung unterbrochen wird. Die vom Speicher 17 gelieferten Schwellen sind im allgemeinen abhängig vom momentanen Motorbetriebszustand.

**Patentansprüche**

1. Verfahren zum Erkennen von Aussetzern in einem Verbrennungsmotor, bei dem

   - Laufunruhewerte (LU) erfaßt werden, die ein Maß für aussetzerbedingte Änderungen der Kurbelwellendrehzahl des Motors sind, dadurch gekennzeichnet, daß
   - der Abstand (W) zwischen Bändern von Laufunruhewerten berechnet wird und
   - geprüft wird, ob der berechnete Bandabstand größer als ein vorgegebener Schwellenabstand (W_SW) ist, und falls dies der Fall ist, diese Information als Hinweis darauf verwendet wird, daß Aussetzer und nicht Störungen der Kurbelwellendrehzahl vorliegen.

2. Verfahren nach Anspruch 1, **dadurch gekennzeichnet,** daß der Schritt des Berechnens des Abstandes zwischen zwei Bändern von Laufunruhewerten folgende Unterschritte aufweist:

   - es wird ein positiver Laufunruhe-Schwellenwert (SW_P) vorgegeben;
   - der tiefste zuverlässig erscheinende Laufunruhewert über diesem Schwellenwert wird ermittelt;
   - der höchste zuverlässig erscheinende Laufunruhewert unter diesem Schwellenwert wird ermittelt, und
   - die Differenz zwischen den beiden ermittelten Werten wird gebildet und als Maß für den Bandabstand um den positiven Laufunruhe-Schwellenwert verwendet.

3. Verfahren nach Anspruch 2, **dadurch gekennzeichnet,** daß der berechnete Bandabstand mit einem Schwellenabstand (W_SW_P) verglichen wird und dann, wenn der Bandabstand kleiner als der Schwellenabstand ist, wie folgt weiter verfahren wird:

   - es wird der Laufunruhe-Schwellenwert Null (SW_O) vorgegeben;
   - der tiefste zuverlässig erscheinende positive Laufunruhewert wird ermittelt;
   - der höchste zuverlässig erscheinende negative Laufunruhewert wird ermittelt;
   - die Differenz zwischen den beiden ermittelten Werten wird gebildet und als Maß für den Bandabstand um den Laufunruhe-Schwellenwert Null verwendet, und
   - dieser berechnete Bandabstand wird mit einem Schwellenabstand (W_SW_O) verglichen.

4. Verfahren nach einem der vorstehenden Ansprüche, **dadurch gekennzeichnet,** daß dann, wenn kein Bandabstand größer als der ihm zugeordnete Schwellenabstand festgestellt wird, wie folgt weiter verfahren wird:

   - es wird ein negativer Laufunruhe-Schwellenwert (SW_N) vorgegeben;
   - es wird untersucht, ob ein zuverlässig erscheinender Laufunruhewert unter diesem Schwellenwert liegt, und
   - wenn diese Bedingung erfüllt ist, wird diese Information als Hinweis darauf verwendet, daß eine Störung der Kurbelwellendrehzahl durch Triebstrangschwingungen vorliegt, und die Aussetzererkennung wird unterbrochen.

5. Vorrichtung zur Unterdrückung von Störungen bei oder Erkennung von Aussetzern in einem Verbrennungsmotor (14) mit

   - einer Einrichtung (11) zum Berechnen von Laufunruhewerten, die ein Maß für aussetzerbedingte Änderungen der Kurbelwellendrehzahl des Motors sind;

   **gekennzeichnet durch:**

   - eine Einrichtung (15), die den Abstand zwischen Bändern von Laufunruhewerten berechnet;
   - einen Speicher (17), der einen Laufunruhe-Schwellenwert (SW_P beziehungsweise SW_O), einen Schwellenabstand (W_SW_P beziehungsweise W_SW_O) und einen negativen Laufunruhe-Schwellenwert (SW_N) vorgibt, wobei diese Werte im allgemeinen vom momentanen Motorbetriebszustand abhängig sind, und
   - eine Vergleichseinrichtung (16), die den berechneten Bandabstand mit dem vorgegebenen Schwellenabstand vergleicht und im Fall eines signifikanten Bandabstandes einen Hinweis auf vorliegende Aussetzer ausgibt, während sie andernfalls bei gleichzeitiger Unterschreitung des negativen Laufunruhe-Schwellenwertes durch die Laufunruhewerte eine Störung der Kurbelwellendrehzahl diagnostiziert und die Aussetzererkennung unterbricht.

## Claims

1. Method for detecting misfires in an internal combustion engine, in which

   - lack-of-smoothness values (LU) are recorded, these being a measure of changes in the crankshaft speed of the engine due to misfires, characterized in that
   - the spacing (W) between bands of lack-of-smoothness values is calculated and
   - a check is performed as to whether the calculated band spacing is greater than a specified threshold spacing (W_SW), and, if this is the case, this information is used as an indication that misfires are present rather than disturbances of the crankshaft speed.

2. Method according to Claim 1, characterized in that the step of calculating the spacing between two bands of lack-of-smoothness values has the following substeps:

   - a positive lack-of-smoothness threshold value (SW_P) is specified;
   - the lowest lack-of-smoothness value that appears to be reliable above this threshold value is determined;
   - the highest lack-of-smoothness value that appears reliable below this threshold value is determined, and
   - the difference between the two values determined is formed and used as a measure of the band spacing around the positive lack-of-smoothness threshold value.

3. Method according to Claim 2, characterized in that the calculated band spacing is compared with a threshold spacing (W_SW_P) and, if the band spacing is smaller than the threshold spacing, the procedure continues as follows:

   - the lack-of-smoothness threshold value zero (SW_0) is specified;
   - the lowest positive lack-of-smoothness value that appears reliable is determined;
   - the highest negative lack-of-smoothness value that appears reliable is determined;
   - the difference between the two values determined is formed and used as a measure for the band spacing around the lack-of-smoothness threshold value zero, and
   - this calculated band spacing is compared with a threshold spacing (W_SW_O).

4. Method according to one of the preceding claims, characterized in that if no band spacing larger than the threshold spacing assigned to it is detected, the procedure continues as follows:

   - a negative lack-of-smoothness threshold value (SW_N) is specified;
   - an investigation is performed as to whether a lack-of-smoothness value that appears reliable is below this threshold value and
   - if this condition is met, this information is used as an indication that there is a disturbance of the crankshaft speed due to drive-line oscillations, and misfire detection is interrupted.

5. Apparatus for suppressing interference in the detection of misfires in an internal combustion engine (14) with

   - a device (11) for calculating lack-of-smoothness values, which are a measure of changes in the crankshaft speed of the engine due to misfires; characterized by:
   - a device (15) which calculates the spacing between bands of lack-of-smoothness values;
   - a memory (17) which specifies a lack-of-smoothness threshold value (SW_P or SW_O), a threshold spacing (W_SW_P or W_SW_0) and a negative lack-of-smoothness threshold value (SW_N), these values generally being dependant on the instantaneous engine operating state, and
   - a comparison device (16) which compares the calculated band spacing with the specified threshold spacing and, in the case of a significant band spacing, emits an indication that misfires are present, while, otherwise, given simultaneous undershooting of the negative lack-of-smoothness threshold value by the lack-of-smoothness values, it diagnoses a disturbance of the crankshaft speed and interrupts misfire detection.

**Revendications**

1. Procédé de détection des ratés d'un moteur à combustion interne selon lequel :

   - on saisit des coefficients d'irrégularité de fonctionnement (LU) qui sont une mesure des variations de la vitesse de rotation du vilebrequin du moteur provoquées par des ratés,

   caractérisé en ce qu'

   - on calcule l'intervalle (W) entre les bandes de coefficients d'irrégularité de fonctionnement et,
   - on vérifie si l'intervalle de bande calculé est supérieur à un intervalle de seuil prédéterminé (W_SW) et dans l'affirmative, on utilise cette information comme indication de l'existence de ratés et non de perturbations de la vitesse de rotation du vilebrequin.

2. Procédé selon la revendication 1,
   caractérisé en ce que
   l'étape de calcul de la distance entre deux bandes de coefficients d'irrégularité de fonctionnement comprend les deux sous-étapes suivantes :

   - on prédétermine un seuil positif d'irrégularité de fonctionnement SW_P,
   - on détermine le coefficient d'irrégularité de fonctionnement le plus bas, fiable, au-dessus de ce seuil,
   - on détermine le coefficient d'irrégularité de fonctionnement le plus haut, fiable en dessous de ce seuil, et
   - on détermine la différence entre les deux coefficients obtenus et on utilise cette différence comme mesure de l'intervalle entre les bandes pour le seuil positif d'irrégularité de fonctionnement.

3. Procédé selon la revendication 2,
   caractérisé en ce qu'
   on compare l'intervalle de bande, calculé à un intervalle de seuil (W_SW_P) puis si l'intervalle de bande est inférieur à l'intervalle de seuil, on poursuit comme suit :

   - on fixe à nul le seuil d'irrégularité de fonctionnement (SW_O),
   - on détermine le coefficient d'irrégularité de fonctionnement, positif le plus bas, fiable,
   - on détermine le coefficient d'irrégularité de fonctionnement, négatif le plus haut, fiable,
   - on forme la différence entre les deux coefficients obtenus et on l'utilise comme mesure de l'intervalle de bande autour de la valeur nulle du seuil d'irrégularité de fonctionnement et,
   - on compare l'intervalle de bande calculé à un intervalle de seuil (W_SW_O).

4. Procédé selon l'une des revendications précédentes,
   caractérisé en ce que

   - si aucun intervalle de bande n'est supérieur au seuil associé on poursuit comme suit :
   - on fixe un seuil négatif d'irrégularité de fonctionnement (SW_N),
   - on examine s'il existe un coefficient d'irrégularité de fonctionnement, fiable en dessous de ce seuil et,
   - si cette condition est satisfaite, on utilise cette information comme indication de la présence d'une perturbation de la vitesse de rotation du vilebrequin par des oscillations de la ligne de transmission et on arrête la détection des ratés.

5. Dispositif pour éliminer les perturbations à la détection de ratés dans un moteur à combustion interne (14) comprenant :

   - une installation (11) pour calculer les coefficients d'irrégularité de fonctionnement qui sont une mesure des variations de la vitesse de rotation de vilebrequin du moteur engendrées par les ratés,

   caractérisé par

   - une installation (15) calculant l'intervalle entre les bandes des coefficients d'irrégularité de fonctionnement,
   - une mémoire (17) qui prédétermine un seuil d'irrégularité de fonctionnement (SW_P, SW_O) un intervalle de seuil (W_SW_P ou W_SW_O) et un seuil négatif d'irrégularité de fonctionnement (SW_N), ces valeurs dépendant en général de l'état de fonctionnement instantané du moteur et,

- un comparateur (16) qui compare l'intervalle de bande calculé à un seuil prédéterminé et en cas d'intervalle de bande significatif, il émet une indication sur la présence de ratés alors que dans le cas contraire, pour un dépassement vers le bas, simultané du seuil négatif d'irrégularité de fonctionnement par les coefficients d'irrégularité de fonctionnement, on diagnostique qu'il y a une perturbation de la vitesse de rotation du vilebrequin et on arrête la détection des ratés.

# Fig.1

a)   b)   c)   d)

# Fig. 2

(A)

positive Schwelle
SW_P setzen — s 3.1

Abstand W_P zwischen d.
tiefsten Wert über SW_P
und dem höchsten Wert
unter SW_P berechnen — s 3.2

W_P >
W_SW_P
? — s 3.3

j

n

Schwelle SW_0
setzen — s 3.4

Abstand W_0 zwischen d.
tiefsten positiven und
dem höchsten negativen
Wert berechnen — s 3.5

W_0 >
W_SW_0
? — s 3.6

j    n

(C)

(B)

## Fig. 3

Fig.4

Fig.5